# EUROPEAN PATENT SPECIFICATION

(11) **EP 3 682 284 B1**
(45) Date of publication and mention of the grant of the patent: **20.09.2023**
(21) Application number: 18847280.7
(22) Date of filing: 28.08.2018
(51) Int. Cl.: G02B 21/02, G02F 1/01, G02B 3/10

(54) **METHOD OF CREATING A MULTI-PLANAR IMAGE BY USING VARIFOCAL LENSES AND A DEVICE TO REALIZE THIS METHOD**
VERFAHREN ZUR ERZEUGUNG EINES MULTIPLANAREN BILDES UNTER VERWENDUNG VON VARIOOBJEKTIVEN UND VORRICHTUNG ZUR DURCHFÜHRUNG DIESES VERFAHRENS
PROCÉDÉ DE CRÉATION D'UNE IMAGE MULTIPLANAIRE À L'AIDE DE LENTILLES À FOCALE VARIABLE ET DISPOSITIF POUR RÉALISER CE PROCÉDÉ

(30) Priority: 13.09.2017 PL 42285117
(43) Date of publication of application: 22.07.2020
(73) Proprietor: Uniwersytet Im. Adama Mickiewicza W Poznaniu, 61-712 Poznan (PL)
(72) Inventor: DOBEK, Krzysztof, 60-688 Pozna (PL)
(74) Representative: Urbanska-Luczak, Barbara
(86) International application number: PCT/PL2018/000082
(87) International publication number: WO 2019/054887

(56) References cited:
- US-A1- 2013 006 056
- DOBEK KRZYSZTOF ET AL: "Thermal lens in a liquid sample with focal length controllable by bulk temperature", APPLIED PHYSICS B: LASERS AND OPTICS, SPRINGER INTERNATIONAL, BERLIN, DE, vol. 122, no. 5, 11 May 2016 (2016-05-11), pages 1-6, XP035986674, ISSN: 0946-2171, DOI: 10.1007/S00340-016-6429-5 [retrieved on 2016-05-11]
- CHEN QINGMING ET AL: "Optofluidic tunable lens using laser-induced thermal gradient", 2016 CONFERENCE ON LASERS AND ELECTRO-OPTICS (CLEO), OSA, 5 June 2016 (2016-06-05), pages 1-2, XP033025365, [retrieved on 2016-12-16]

## Description

The subject of the invention is a method of creating a multi-planar image by using varifocal lenses and a device to realize this method, having application in the optical industry.

Due to the growing need for new technologies, a number of different solutions have been proposed to overcome the limitation of the classic lens - its fixed focal length, f. One of them is the artificial elastic intraocular lens, which was discussed in the NuLens^{®} intraocular lens publication, NuLens Ltd. Herzliya, Israel, US patent 20070244561 A1. The shape of the lens is changed by the pressure of the muscles of the human eye. Another are polymer lenses with variable focal lengths, operating on the basis of deformation of the elastic refracting surface of the lens by changing the pressure of a liquid, which this surface closes, as presented in Chen J., Wang W., Fang J., Varahramyan K. "Variable-focusing microlens with microfluidic chip" J. Micromech Microeng. 14 (2004) 675-680. b) Agarwal M., Gunasekaran R.A., Coane P., Varahramyan K. "Polymer-based variable focal length microlens system" J. Micromech. Microeng. 14 (2004) 1665-1673. c) Zhang D.-Y., Lien V., Berdichevsky Y., Choi J., Lo Y.-H. "Fluidic adaptive lens with high focal length tenability" Appl. Phys. Lett. 82 (2003) 3171-3172, or by mechanical deformation of one of the polymeric surfaces of the lens, as described in Wisniewska B., Wisniewski W. "An optical element with variable properties and a method of producing an optical element with variable properties" patent PL 191979B1. Also developed are electrostatic-based liquid-focus lenses whose shape is changed by applying an appropriate voltage between two electrodes illustrated in Kwon S., Lee L.P. "Focal Length Control by Microfabricated Planar Electrodes-based Liquid Lens (µPELL)" Proc. 11th Int. Conf. Solid State Sens. Act. Trans. 1342 (2001) 1348-1351, Berge B. "Liquid lens technology: principle of electrowetting based lenses and applications to imaging" Proc. 18th IEEE Int. Conf. Mic. Elec. Mech. Syst. 2005, 227-230, Cheng C.C., Chang C.A., Yeh J.A. "Variable focus dielectric liquid droplet lens" Opt. Express 14 (2006) 4101-4106.

All of the above-mentioned techniques are based on changing the shape of the lens, which leads to a change of its focal length. Therefore, the ability to focus these lenses results from their shape, modifying the optical path of light. Other than the optical elements having a surface that refracts the light rays, the ability to focus or diffuse light is also demonstrated by a medium in the shape of a cube, in which a properly formed refractive index distribution occurs, Vn. Optical elements of this type of Vn distribution, are named GRIN (gradient refractive index) elements, and are produced as lenses or optical fibers. However, openly available gradient optical elements have their Vn distribution already established during their production. Therefore, they do not provide a variable focal length. All of their optical properties are rigidly set, just like with classic lenses made from glass or polymer. The Vn distribution can, however, be produced temporarily in an optically uniform, homogeneous material. This goal can be attained in the materials with thermo-optical properties. The absorption of laser beams causes a local heating of the material. The heterogeneity of the laser beam's intensity over its cross-section, along with the penetration of light into the material, decreases the intensity of the laser beam and exchange of heat overlapping between areas of material at different temperatures leads to the formation of thermo-optical material of non-uniforme temperature distribution. This distribution results in a heterogeneous distribution of the Vn refractive index. This phenomenon is called thermal focusing, and the lens formed in this manner is referred to as a thermal lens. The current state of the art indicates that materials with thermo-optical properties are better suited to create lenses induced by a laser beam. In each case in which the Vn distribution created with a laser beam gives the light a phase delay analogous to that of a traditional lens, an optical element in which such a Vn distribution is present it called a lens. The material in which such a lens can be made will be hereinafter referred to as active gradient refractive index material (active GRIN (gradient refractive index)), and the lens created in such material by laser beam illumination will be hereinafter referred to as an active gradient refractive index lens.

The active gradient refractive index lens is created with a laser beam propagating in a direction parallel to the optical axis of the optical system, of which the active gradient refractive index lens is a subassembly.

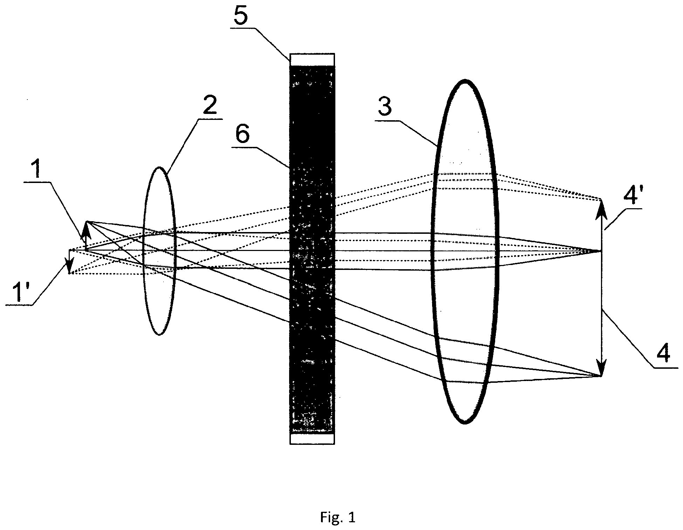

The previous considerations regarding the applicability of active gradient refractive index lenses in imaging concerned the optical axis of the system whose lens was a subassembly. In all such considerations, the cross-section of the optical axis of the system measured for the active gradient refractive index element used and the cross-section of the laser beam forming the active gradient refractive index lens in this material had diameters greater than the aperture of the entire optical system containing the active gradient refractive index lens itself. Fig. 1 presents a simplified schematic of the optical system shown in Angelini, A., Pirani, F., Frascella, F., Ricciardi, S., Descrovi, E. "Light-driven liquid microlens" Proc. of SPIE 10106, 1010610 (2017). It is a microscope with a lens 2 that creates an image of the object of observation 1 in infinity. Without the presence of the active gradient refractive index lens 6, the image is then transformed by the eyepiece 3 into an image 4 formed in the image plane at a finite distance from the imaging plane of the main eyepiece. For the clarity of description of Fig. 1, no aberrations of the optical system are included. Similarly, the course of rays illustrated in Fig. 1 does not have to match the course imposed by the shape of the schematically illustrated lenses, and is for demonstrative purposes only. The presence of the active gradient refractive index material in the form of the active gradient refractive index plate 5, in which the active gradient refractive index lens 6 is formed, with a section clearly larger than the aperture of the system, allowing to create a 4' image in the same image plane in which the image 4 is created without the active gradient refractive index lens 6 being present, wherein picture 4' corresponds to object 1' in a different object plane than object 1. The active gradient refractive index lens 6 is coaxial with the lens and eyepiece, and modifies the direction of all light rays passing through the optical system of the microscope. This means that the presence of the active gradient refractive index lens changes the objective plane of the microscope.

It is known from U.S. patent No. US 9 375 136 B2, multi-focal optical component, optical system, and imaging method, lies in the fact that an optical lens comprising a lens body that transmits light in an optical path there through, wherein the lens body consists of an anterior surface, a posterior surface, and a medium there between, further wherein one of the anterior surface and the posterior surface has a single curvature and the other of the anterior surface and the posterior surface has at least two optical zones each having a different curvature. An optical system, comprising a multi-photon endoscope having a distal end, and the optical lens disposed in the distal end. A method for obtaining an image of an object comprising providing the multi-photon endoscope, propagating light from the endo-scope scanner one optical zone of the lens to focus the light at a focus location, and propagating light from the scanner through a different optical zones of the lens to focus the light at a different focus location.

In the publication of K. Dobek et al. Appl. Phys. B: Lasers and Optics, Springer International, Berlin, DE, vol. 122 (2016)151 "Thermal lens in a liquid sample with focal length controllable by bulk temperature", an experimental and numerical investigation of the applicability of the temperature-controlled focal length of a thermally induced lens is reported. The thermal lens is formed as a result of absorption of a heating laser beam. Numerical simulations and experimental results show that changing the bulk temperature of the material of the lensing element allows for the selection of its focal length. Shown that it is possible to modify the focal length of a thermal lens by changing its bulk temperature. This procedure could be used in a laser resonator in order to react to unwanted laser beam focusing/defocusing. While temperature control is relatively slow, the method proposed may be of interest to those looking for a flexible lens passively changing its focal length as a result of bulk temperature change.

By using the solution according to the invention, the following technical effects have been obtained:
- the possibility of obtaining, in the same image plane of the optical system provided with a solution, a sharp image of two (or more) objects in two (or more) different object planes, the distance separating these planes, measured in the direction of the optical axis of the system, exceed the distance corresponding to the maximum depth of field of the optical system provided in the solution, while these objects must not cover each other,
- the ability to automatically adjust the focal length of the active gradient refractive index lens(- es) as an integral part of the solution and automatically change the position of the same active gradient refractive index lens(-es) to automatically obtain a sharp image of two (or more) objects, of which one (or more) are in motion while observing the sharp image of one (or more) immobile object(s), wherein the movable and immovable objects may be in different planes of the object's optical system provided with the solution, spaced from each other by a distance exceeding that which corresponds to the depth of field of the optical system provided with the solution, while these items can not cover each other,

- the ability to focus the light of a single laser beam in one or several different points of the image space of the optical element constituting the solution, wherein the position of these points can be changed continuously in both the optical axis direction of the element forming the solution and in a direction perpendicular to the optical axis,
- the ability to focus the light of multiple laser beams in various points of the image space of the optical element constituting the solution, wherein the position of these points change continuously in the direction of the optical axis of the element.

A method in accordance with the invention is defined in independent claim 1.

It is advantageous if the diverging active gradient refractive index lens, is used when the second observed object is located at a greater distance, measured from the first plane of the main active gradient refractive index lens than the first observed object.

It is also advantageous if the converging active gradient refractive index lens (6') is used when the second observed object is located at a smaller distance measured from the first plane of the main active gradient refractive index lens than the first observed object.

It is also advantageous if the diverging further active gradient refractive index lens, is used when the third observed object is located at a greater distance, measured from the first plane of the main further active gradient refractive index lens than the first observed object.

It is also advantageous if the converging further active gradient refractive index lens, is used when the third observed object is located at a smaller distance, measured from the first plane of the main further active gradient refractive index lens than the first observed object.

A device in accordance with the invention is defined in independent claim 6.

It is advantageous if the laser light source being located in the further housing with the side walls and and the further laser light source is a diode laser.

It is also advantageous when the optical element being located in the housing is a dichroic mirror.

It is also advantageous when the optical element being located in the housing is a polarizing cube.

It is also advantageous when the optical element being located in further housing with the side walls is a dichroic mirror.

It is also advantageous when the optical element being located in further housing with the side walls is a polarizing cube.

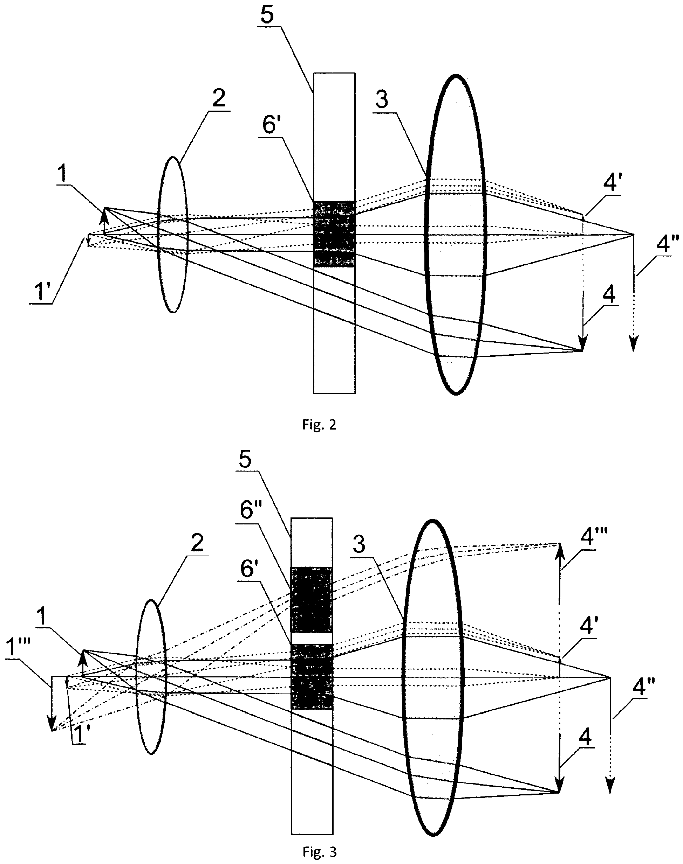

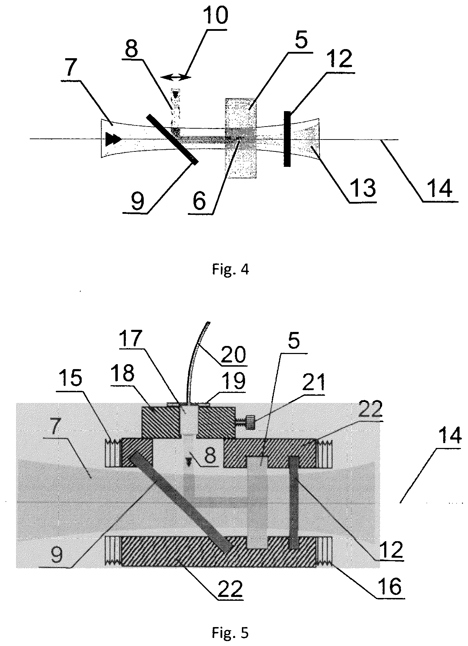

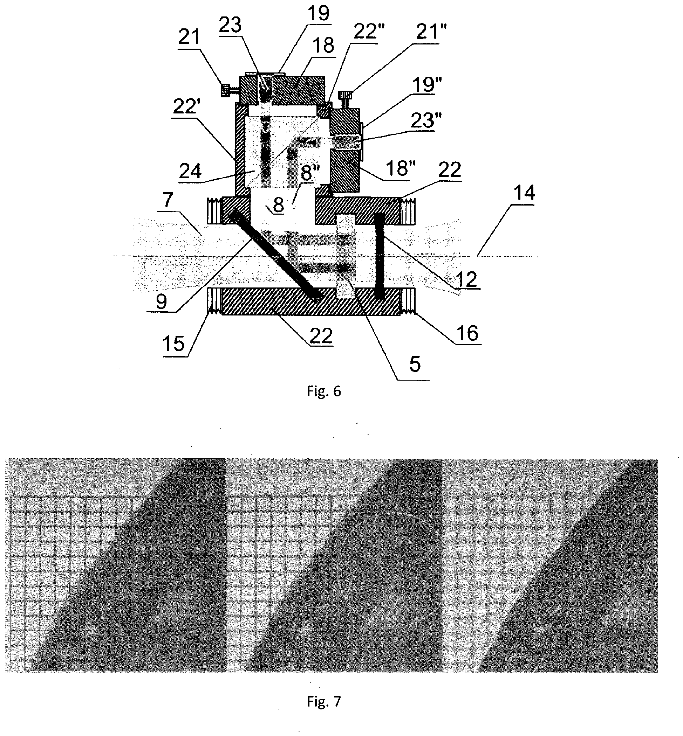

The invention, in an exemplary but non-limiting embodiment, is presented in Fig. 6. Fig. 1 presents a simplified schematic of the optical system shown in Angelini, A., Pirani, F., Frascella, F., Ricciardi, S., Descrovi, E. "Light-driven liquid microlens" Proc. of SPIE 10106, 1010610 2017, Fig. 2 presents the optical system with a single active gradient refractive index lens, Fig. 3 illustrates the use of two active gradient refractive index lenses, Fig. 4 schematically illustrates the method of creating active gradient refractive index lens in the active gradient refractive index plate , Fig. 5 presents a solution with the use of one laser beam, on Fig. 6 a solution using small lasers as a two-laser beam source, and Fig. 7 presents an example photo of the resulting image.

Fig. 2 schematically presents the optical system with a single active gradient refractive index lens. This system is composed of three featured components of the entire set of optical elements forming the imaging system. These are the optical elements forming the subset 2, the active gradient refractive index plate 5 and subset 3 of optical elements. If it is assumed that a human eye lens or camera is not part of subassembly 3, then, for general imaging, only the AGRIN plate 5, or active gradient refractive index plate 5 and a subset of 2 optical elements, or active gradient refractive index plate 5 and a subset of 3 optical elements or all three components shown as in Fig. 2 may be used. Fig. 2 shows a simplified microscope schematic including an active gradient refractive index lens 6' and a subset of 2 optical elements playing the role of a lens, while a subset of 3 optical elements plays the role of an eyepiece, and for simplicity, are both subsets illustrated as single lenses. In the active gradient refractive index plate 5, an area with inhomogeneous refractive index distribution Vn is produced with the help of a laser beam (not shown), playing the role of the active gradient refractive index lens 6' with a properly selected focal length. The active gradient refractive index lens 6' differs from the active gradient refractive index lens 6 with a cross-sectioned diameter. In the case of the active gradient refractive index lens 6', this diameter is clearly smaller than the aperture of the optical system (e.g. the microscope), where the active gradient refractive index lens is a subassembly. In Fig. 2 the active gradient refractive index lens 6' is coaxial with the optical axis of lens 2 and eyepiece 3 i.e. it lies in the optical axis of the system. It doesn't have to be this way. In general, it can be created by means of a laser beam in the non-axial area. Fig. 2 schematically illustrates the effect of the active gradient refractive index lens 6'. Fig. 2 does not take into account any aberrations of the optical system. Similarly, the course of rays illustrated in Fig. 2 does not have to match the course imposed by the shape of the schematically illustrated lenses, and is for demonstrative purposes only. In Fig. 2 there are two imaging objects illustrated. Two types of rays leave first observed object 1: a beam of aperture rays and a beam of field rays. Aperture rays pass through the active gradient refractive index lens 6'. Half-rays pass through the active gradient refractive index plate 5 but in the area with a homogeneous distribution of the *∇n* refractive index. Illustrated in Fig. 2 is arrangement of the active gradient refractive index 6' scattering type lens. This happens when the in homogeneous distribution of the Vn refractive index corresponds to the smallest value of the n refractive index in the axis of the active gradient refractive index lens, and the maximum on its edges. The aperture rays of the first observed object 1 are effectively deflected from the optical axis of the active gradient refractive index lens 6'. This results in the creation of image 4" of the axial point of object 1 at a distance from the second plane of the main active gradient refractive index 6' lens greater than without the presence of active gradient refractive index 6' lenses. The half-ray of the first observed first observed object 1 does not yield additional deflection and create image 4 of the first observed object 1 at a distance from the second plane of the main active gradient refractive index lens 6' smaller than in the presence of the active gradient refractive index lenses 6'. The second observed object 1' is located at a distance measured from the first plane to the main active gradient refractive index lens 6' greater than the first observed object 1. In effect, the lens creates an image of the second observed object 1' at a finite picture distance. The second observed object 1' is, however, small enough that both the aperture rays and the half-rays, whose beams leave the second observed object 1', pass through the AGRIN lens 6'. The active gradient refractive index lens 6' modifies the aperture and half-rays of the second observed object 1' so that the image of object 1' is again created in the infinity. As a result, the eyepiece creates a picture 4' of the object 1' in the same image plane of the eyepiece, in which there is picture 4 of the first observed object 1. It is possible to simultaneously observe sharp images 4 of a part of the first observed object 1 and 4' of all of the second observed object 1'.

Fig. 3 illustrates using two active gradient refractive index lenses 6' and 6". In the active gradient refractive index plate 5, a further active gradient refractive index lens 6" with an appropriate focal length is produced by means of a further heating laser beam 8". The beam of the field rays leaving the portion of the second observed object 1' passing through the further active gradient refractive index 6" lens is formed in such a way that it forms a 4'" image of the third observed object 1"' at the same distance from the second plane of the main active gradient refractive index lens 6' in which an image of the second observed object 1' and a part of the first observed object 1 is formed. As a result, in the same plane of observation, an image of three observed objects lying in different planes is created.

Fig. 4 schematically illustrates the method of creating the active gradient refractive index lenses 6' in the active gradient refractive index plate 5. The rays of imaged the first observed object 1 and the second observed object 1' create an imaged light beam 7. The arrow on the illustration of this beam shows the direction of propagation from the object to the image. The heating laser beam 8 of wavelength λₗₐₛₑᵣ, selected for the active gradient refractive index material of the active gradient refractive index plate 5 is directed by means of a shifting system 10 acting in any manner towards the optical element 9 transmitting light beam 7, which then reflects the laser beam 8. On the illustration, the laser beam has an arrow showing the direction of the laser beam propagation. The optical element 9 could be e.g. a dichroic mirror, polarizing cube or any other optical element fulfilling the above condition of reflecting the laser beam 8 and transmitting the imaged light beam 7. Reflected from the optical element 9, the laser beam moves parallel to the optical axis of system 14 and falls on an active gradient refractive index plate 5 made out of active gradient refractive index material, in which it forms an active gradient refractive index lens 6'. Behind the active gradient refractive index plate 5 the filter 12 is located, which does not transmit light of the wavelength of the laser beam 8, λₗₐₛₑᵣ, of which a part can pass through the active gradient refractive index plate 5, while the filter 12 transmits light on a different length than the light length of the laser beam 8. The presence of the filter 12 is not necessary, if the range of intensity of the laser beam 8 and the optical properties of the active gradient refractive index plate 5 (e.g. the transmission coefficient for the wavelength of λₗₐₛₑᵣ) are chosen so that for any intensity of the laser beam 8, the light of the laser beam does not pass through the active gradient refractive index plate 5. The illustrated the active gradient refractive index lens 6' on Fig. 4 is of a diverging type and makes part 13 of the beam imaged by the system, and passing through the active gradient refractive index lens 6' more divergent/less convergent with respect to the imaged light beam 7 entering the active gradient refractive index plate 5.

The proper selection of the wavelength, λₗₐₛₑᵣ, of the laser beam 8 to the active gradient refractive index material of the active gradient refractive index plate 5 means that it is absorbed by the active gradient refractive index material and leads to the Vn refractive index distribution inside the active gradient refractive index material, according to the mechanisms previously described.

The invention is presented in Fig. 6, where Fig. 5 shows the solution with the use of one laser beam 8 being delivered to the system with the help of an optic fiber 20 and a fiber optic collimator 17. The fiber optic collimator 17 is mounted on sliding handle 18, operating in two directions, perpendicular to the direction of travel of the laser beam 8 leaving the fiber optic collimator 17. Fig. 5 illustrates the possibility of moving the collimator 17 in only one direction parallel to the optical axis of system 14, and the displacement can be made possible by means of e.g. a hand-held micrometer screw 21 or a motorized, electronically controlled screw. The fiber optic collimator 17 is fastened to the sliding handle 18 by clamp 19. The light of the laser beam 8 that is emitted by the fiber optic collimator 17 is directed in the direction of the optical element 9 transmitting the light beam of image 7 and reflecting the laser beam 8, e.g. on a dichroic mirror. Next, the laser beam falls on the active gradient refractive index plate 5. Behind the active gradient refractive index plate 5, the remaining light from the laser beam 8 is absorbed by the filter 12. The optical element 9, the active gradient refractive index plate 5 and the filter 12 are fastened to the optical system housing 22. The housing 22, the further housing with the side walls 22' and 22" of optical systems, as illustrated on Fig 5 and 6 is an integral part of the housing of a larger optical system, as illustrated in Fig. 2, or the housing of optical systems illustrated in Fig. 5 and 6 are finished with elements allowing for the connection of these systems with other optical systems e.g. with the help of threads - connectors 15 and 16. In the arrangement illustrated in Fig. 2, the thread - connector 15 serves to connect the optical systems illustrated in Fig. 5 and 6 with optical element 2, and the thread - connector 16 serves to connect the optical systems illustrated in Fig. 5 and 6 with optical element 3. Fig. 6 presents the solution with the use of two laser beams 8 and 8", that can form two individual lenses, active gradient refractive index 6' and 6" in the active gradient refractive index plate 5. Fig. 6 presents the solution using small lasers, e.g. diode, as a laser light source 23 being located in the further housing with the side walls 22' and 22"of the laser beam 8 and a further laser light source 23" of the further laser beam 8". For illustrative purposes, they are shown offset relative to sliding holder 18 and further sliding holder 18", in which the diode lasers 23 and 23" are attached. The diode lasers 23 and 23" are moved with screws 21 and 21". The beams emitted by diode lasers 23 and 23" are directed to optical element 24 mounted in the further housing with the side walls (22') and (22") which transmits the laser beam falling on it in a direction perpendicular to the optical axis of system 14 and reflects the laser beam at a right angle in a direction parallel to the optical axis of system 14. The role of such an element play as a polarizing cube 24. Assuming that the beam of both diode lasers 23 and 23" is polarized in the right way, the polarizing cube 24 direct laser beams 23 and 23" towards optical element 9 with a yield of nearly 100%. The other elements of the system illustrated in Fig. 6 play the same role as their counterparts in Fig. 5. They differ in the presence of housing part 22', as highlighted in Fig. 6. In the case where element 24 directs a part of the light of laser beams 8 and 8" towards housing with the side walls 22' and 22", e.g. when its role is played by a normal polarizing cube 24, then further housing with the side walls 22' and 22" absorb it and the resulting heat be returned to the environment, e.g. using a radiator. Fig. 7 presents three photos from a prepared publication presenting the final effect of the operation of a local laser-induced lens. On the left side, a microscope scale image is visible, with an elementary scale spacing of 50 µm, and underneath, samples of a pumpkin stem cross-section, with the microscope lens focus set on the scale. On the right side, the same image is visible, but with the focus set on the cross section of the pumpkin stem. In the middle, the same pair of samples is visible with the active lens induced in the area of the marked circle. The presence of an induced lens causes the image of the pumpkin-stem cross-section to come into focus in the region subjected to an induced lens, and the scale is in focus in the remaining image area.

## Claims

1. An Image forming method using a multi-plane varifocal lens, **characterized in that** the method is performed in a device comprising an imaging optical system (2, 3) and an active gradient refractive index plate (5) made of a thermo-optical material with a homogeneous refractive index distribution, wherein a diverging or converging type of varifocal thermal active gradient refractive index lens (6) is created by directing a heating laser beam (8) propagating in a direction parallel to the optical axis of the optical system onto the active gradient refractive index plate (5), thereby creating the multi-plane varifocal lens, wherein the active gradient refractive index lens (6') has a diameter smaller than the diameter of the aperture of the imaging optical system in order to create a multi-planar image the method further comprising to place at least one converging lens of the imaging optical system in such a way that light rays from a part of a first observed object (1) pass through the region of the active gradient refractive index lens (6') as well as through the region with a homogeneous refractive index distribution of the active gradient refractive index plate (5), wherein all of the rays that pass through the active gradient refractive index plate (5) also pass through the at least one converging lens, and as a result of which, the rays from the first observed object (1) that pass through the active gradient refractive index lens (6') form a sharp image (4") of the part of the first observed object (1) at a different imaging distance measured from the second plane of the main active gradient refractive index lens (6') than the rays from the first observed object (1) which do pass through the part of the active gradient refractive index plate (5) having a homogeneous refractive index distribution, the active gradient refractive index lens (6') forming a sharp image (4) of a part of the first observed object (1) at the same image distance measured from the second plane of the main active gradient refractive index lens (6'), in which an image (4') of a second observed object (1') appears, wherein the second observed object (1') is located in a different plane than the first observed object (1), wherein all the light rays that pass through the optical system which are used for imaging pass through the active gradient refractive index lens (6') creating a sharp image (4') of the second observed object (1') in one image plane identical to the plane in which a sharp image (4) of the part of the first observed object (1) was created, in this manner thereby creating a multi-plane, uniform, sharp image of the part of the first observed object (1) and the second observed object (1'), wherein after creating a further active gradient refractive index lens (6") in the active gradient refractive index plate (5) with a parallel axis of symmetry not overlapping with the optical axis of the system, all light rays passing through a part of a third observed object (1‴) that pass through the imaging optical system and pass through the further active gradient refractive index lens (6") form a sharp image (4‴) of the part of the third observed object (1‴) in the same plane in which the images (4) and (4') of the first (1) and second (1') observed object were created, thus creating a multi-plane, uniform, sharp image from the combination of the image (4) of the part of the first observed object (1), image (4') of the second observed object (1') and image (4‴) of the part of the third observed object (1‴), the three observed objects lying in different planes.

2. A method according to claim 1, **characterized in that** the diverging the active gradient refractive index lens (6'), is used when the second observed object (1') is located at a greater distance, measured from the first plane of the main active gradient refractive index lens (6') than the first observed object (1).

3. A method, according to claim 1, **characterized in that** the converging active gradient refractive index lens (6') is used when the second observed object (1') is located at a smaller distance measured from the first plane of the main active gradient refractive index lens (6') than the first observed object (1).

4. A method according to claim 1, **characterized in that** the diverging further active gradient refractive index lens (6"), is used when the third observed object (1‴) is located at a greater distance, measured from the first plane of the main further active gradient refractive index lens (6") than the first observed object (1) .

5. A method according to claim 1, **characterized in that** the converging further active gradient refractive index lens (6"), is used when the third observed object (1‴) is located at a smaller distance, measured from the first plane of the main further active gradient refractive index lens (6") than the first observed object (1) .

6. A multi-planar image creation device with a multi-plane varifocal lens, the device comprising an imaging optical system (2, 3) and an active gradient refractive index lens (6'), wherein the active gradient refractive index lens is a subassembly of the imaging optical system and acts as the multi-plane varifocal lens, wherein the active gradient refractive index lens comprises at least one laser light source (17) configured to emit a heating laser beam (8), a holder (18) sliding in two perpendicular directions, an optical element (9) being located in the housing (22) transmitting imaged light (7) over a wide spectral range, and reflecting the heating laser beam (8), an active gradient refractive index plate (5) having homogeneous refractive index, a laser beam - impermeable filter (12) and a housing (22) holding the components at fixed mutual distances, **characterized in that** the active gradient refractive index lens (6') is formed in the active gradient refractive index plate (5) by the heating laser beam (8) such that a region of the active gradient refractive index plate (5) remains having a homogeneous refractive index distribution, wherein the diameter of the active gradient refractive index lens (6') formed by the heating laser beam (8) is smaller than the aperture of the imaging optical system, such that light rays from a part of an observed object (1) pass through the region of the active gradient refractive index lens (6') as well as through the region with a homogeneous refractive index distribution of the active gradient refractive index plate (5), thereby creating a multi-planar image, wherein the laser light source is a fiber optic collimator (17) connectable to an external laser, the fiber optic collimator (17) being mounted by a clamp (19) in a sliding holder (18) operating in two directions perpendicular to the direction of the laser beam (8) coming out of the laser light source (17), with the sliding holder (18) being placed on the housing (22), the optical element (9) being located in the housing (22) in such a way that it transmits the imaged light beam (7) and reflects the laser beam (8) at a right angle, along the optical axis (14) towards the active gradient refractive index plate (5), which is placed behind the optical element (9) along the beam of imaged light (7) passing along the optical axis (14) of the optical system installed in the housing (22), wherein the laser beam (8) falls perpendicularly on the active gradient refractive index plate (5), wherein the laser beam - impermeable filter (12) is located behind the active gradient refractive index plate (5) such that the laser beam - impermeable filter (12) is situated axially in the housing (22) and perpendicularly to the optical axis (14), in order to absorb the light of the heating laser beam (8), wherein on the ends of the housing (22) connectors (15, 16) are placed which enable the installation of additional classical optical systems, moreover a further laser light source (23") configured to emit a further heating laser beam (8"), is mounted to a further sliding holder (18") with a further clamp (19") and installed in the further housing with the side walls (22') and (22"), where the further holder (18") operates in two directions perpendicular to the direction of the emission of the further heating laser beam (8"), wherein a further optical element (24) is mounted in the further housing with the side walls (22') and (22") transmits the heating laser beam (8) from the laser light source (23) being located in the further housing with the side walls (22') and (22") and reflects the further heating laser beam (8") from the further laser light source (23"), directing both beams in parallel on the optical element (9) being located in the housing (22), which transmits the imaged light (7) beam and reflects both the heating laser beams (8) and (8") at a right angle along the optical axis (14) towards the active gradient refractive index plate (5), in which the heating laser beam (8) creates the active gradient refractive index lens (6') and the further heating laser beam (8") creates a further active gradient refractive index lens (6") such that a region of the active gradient refractive index plate (5) remains having a homogeneous refractive index, wherein the diameter of the active gradient refractive index lens (6') formed by the heating laser beam (8) is smaller than the aperture of the imaging optical system such that light rays from a part of an observed object (1) pass through the region of the active gradient refractive index lens (6'), while light rays from the second part of object (1') pass through the region with a homogeneous refractive index distribution of the active gradient refractive index plate (5), and wherein the diameter of the further active gradient refractive index lens (6") formed by the further heating laser beam (8") is smaller than the aperture of the imaging optical system such that light rays from a part of the third observed object (1‴) pass through the region of the further active gradient refractive index lens (6"), thereby creating a multi-planar image.

7. A device, according to the claim 6, **characterized in that** the laser light source (23) being located in the further housing with the side walls (22') and (22") and the further laser light source (23") is a diode laser.

8. A device, according to the claim 6, **characterized in that** the optical element (9) being located in the housing (22) is a dichroic mirror.

9. A device, according to the claim 6, **characterized in that** the optical element (9) being located in the housing (22) is a polarizing cube.

10. A device, according to the claim 6, **characterized in that** the further optical element (24) being located in further housing with the side walls (22', 22") is a dichroic mirror.

11. A device, according to the claim 6, **characterized in that** the further optical element (24) being located in further housing with the side walls (22', 22") is a polarizing cube.

## Patentansprüche

1. Verfahren zum Ausbilden eines Bildes mit einer mehrebenigen Varifokallinse, **dadurch gekennzeichnet, dass** das Verfahren in einer Vorrichtung ausgeführt wird, die ein optisches Bildgebungssystem (2, 3) und eine aktive Platte mit Brechungsindexgradient (5) enthält, die aus einem thermooptischen Material mit gleichmäßiger Brechungsindexverteilung ausgeführt ist, in dem die aktive thermische varifokale Fokussier- oder Streulinse mit Brechungsindexgradient (6) durch Richten eines Heizlaserstrahls (8), der sich in einer Richtung parallel zu der optischen Achse in dem optischen System ausbreitet, auf die aktive Platte mit Brechungsindexgradient (5) erzeugt wird, wodurch eine mehrebenige Varifokallinse erzeugt wird, wobei die aktive Linse mit Brechungsindexgradient (6') einen Durchmesser aufweist, der kleiner ist als die Apertur des optischen Bildgebungssystems, um ein mehrebeniges Bild zu erzeugen, wobei die Methode ferner das Anordnen mindestens einer Fokussierlinse des optischen Bildgebungssystems umfasst, sodass Lichtstrahlen von einem Teil des ersten Beobachtungsobjekts (1) durch einen Bereich der aktiven Linse mit Brechungsindexgradient (6') sowie durch einen Bereich mit einer gleichmäßigen Verteilung des Brechungsindexgradienten in der aktiven Platte mit Brechungsindexgradient (5) verlaufen, wobei alle Strahlen, die durch die aktive Platte mit Brechungsindexgradient (5) verlaufen, ferner durch die mindestens eine Fokussierlinse verlaufen, wodurch die Strahlen von dem ersten Beobachtungsobjekt (1), die durch die aktive Linse mit Brechungsindexgradient (6') verlaufen, ein scharfes Bild (4") eines Teils des ersten Beobachtungsobjekts (1) in einem anderen Bildabstand, gemessen von der zweiten Hauptebene der aktiven Linse mit Brechungsindexgradient (6'), erzeugen als die Strahlen von dem ersten Beobachtungsobjekt (1), die durch einen Teil der aktiven Platte mit Brechungsindexgradient (5) mit einer gleichmäßigen Verteilung des Brechungsgradienten verlaufen, wobei die aktive Linse mit Brechungsindexgradient (6') ein scharfes Bild (4) eines Teils des ersten Beobachtungsobjekts (1) bei demselben Bildabstand, gemessen von der zweiten Hauptebene der aktiven Linse mit Brechungsindexgradient (6'), erzeugt, wobei das Bild (4') des zweiten Beobachtungsobjekts (1') erscheint, wobei sich das zweite Beobachtungsobjekt (1') in einer anderen Ebene als das erste Beobachtungsobjekt (1) befindet, wobei alle durch das zur Bildgebung verwendete optische System verlaufenden Lichtstrahlen, die durch die aktive Linse mit Brechungsindexgradient (6') verlaufen, ein scharfes Bild (4') des zweiten Beobachtungsobjekts (1') in einer einzigen Bildebene erzeugen, die mit der Ebene identisch ist, in der das scharfe Bild (4) des Teils des ersten Beobachtungsobjekts (1) erzeugt wurde, wodurch ein mehrebeniges, einheitliches, scharfes Bild des Teils des ersten Beobachtungsobjekts (1) und des zweiten Beobachtungsobjekts (1') erzeugt wird, wobei nach dem Erzeugen einer zusätzlichen aktiven Linse mit Brechungsindexgradient (6") in einer aktiven Platte mit Brechungsindexgradient (5) mit einer parallelen Symmetrieachse, die optische Achse des Systems nicht überschneidet, alle durch einen Teil des dritten Beobachtungsobjekts (1 "') verlaufenden Lichtstrahlen, die durch das optische Bildgebungssystem verlaufen und durch eine weitere aktive Linse mit Brechungsindexgradient (6") verlaufen, ein scharfes Bild (4"') eines Teils des dritten Beobachtungsobjekts (1 "') in derselben Ebene erzeugen, in der die Bilder (4) und (4') des ersten (1) und zweiten (1') Beobachtungsobjekts erzeugt wurden, wodurch ein mehrebeniges, gleichmäßiges, scharfes Bild aus der Zusammenführung des Bildes (4) des Teils des ersten Beobachtungsobjekts (1), des Bildes (4') des zweiten Beobachtungsobjekts (1') und des Bildes (4‴) des Teils des dritten Beobachtungsobjekts (1‴) erzeugt wird, wobei die drei Beobachtungsobjekte auf unterschiedlichen Ebenen liegen.

2. Verfahren nach Anspruch 1, **dadurch gekennzeichnet, dass** eine streuende aktive Linse mit Brechungsindexgradient (6') verwendet wird, wenn sich das zweite Beobachtungsobjekt (1') in einem größeren Abstand, gemessen von der ersten Hauptebene der aktiven Linse mit Brechungsindexgradient (6'), befindet als das erste Beobachtungsobjekt (1).

3. Verfahren nach Anspruch 1, **dadurch gekennzeichnet, dass** die fokussierende aktive Linse mit Brechungsindexgradient (6') verwendet wird, wenn sich das zweite Beobachtungsobjekt (1') in einem kleineren Abstand, gemessen von der ersten Hauptebene der aktiven Linse mit Brechungsindexgradient (6'), befindet als das erste Beobachtungsobjekt (1).

4. Verfahren nach Anspruch 1, **dadurch gekennzeichnet, dass** eine zusätzliche streuende aktive Linse mit Brechungsindexgradient (6") verwendet wird, wenn sich das dritte Beobachtungsobjekt (1‴) in einem größeren Abstand, gemessen von der ersten Hauptebene der zusätzlichen aktiven Linse mit Brechungsindexgradient (6"), befindet als das erste Beobachtungsobjekt (1).

5. Verfahren nach Anspruch 1, **dadurch gekennzeichnet, dass** die fokussierende aktive Linse mit Brechungsindexgradient (6") verwendet wird, wenn sich das zweite Beobachtungsobjekt (1‴) in einem kleineren Abstand, gemessen von der ersten Hauptebene der zusätzlichen aktiven Linse mit Brechungsindexgradient (6"), befindet als das erste Beobachtungsobjekt (1).

6. Vorrichtung zum Erzeugen von mehrebenigen Bildern mit einer mehrebenigen Varifokallinse, wobei die Vorrichtung ein optisches Bildgebungssystem (2, 3) und eine aktive Linse mit Brechungsindexgradient (6') umfasst, wobei die aktive Linse mit Brechungsindexgradient eine Komponente des optischen Bildgebungssystems ist und als eine mehrebenige Varifokallinse fungiert, wobei die aktive Linse mit Brechungsindexgradient mindestens eine Laserlichtquelle (17), die zur Emission eines Heizlaserstrahls (8) konfiguriert ist, eine Fassung (18), die sich in zwei senkrechten Richtungen gleitbar verschiebt, ein optisches Element (9), das sich in dem Gehäuse (22) befindet, das Bildlicht (7) über einen breiten Spektralbereich durchlässt und den Heizlaserstrahl (8) reflektiert, eine Platte mit Brechungsindexgradient (5), die einen einheitlichen Brechungsindex aufweist, einen Filter, der den Laserstrahl (12) nicht durchlässt, und ein Gehäuse (22), das die Komponenten in festen Abständen voneinander hält, umfasst, **dadurch gekennzeichnet, dass** die aktive Linse mit Brechungsindexgradient (6) im Inneren der aktiven Linse mit Brechungsindexgradient (5) durch einen Heizlaserstrahl (8) so ausgebildet wird, dass ein Bereich der aktiven Linse mit Brechungsindexgradient (5) verbleibt, in dem eine gleichmäßige Brechungsindexverteilung stattfindet, wobei der Durchmesser der durch den Heizlaserstrahl (8) ausgebildeten aktiven Linse mit Brechungsindexgradient (6) kleiner ist als die Apertur des optischen Bildgebungssystems, sodass Lichtstrahlen von einem Teil des Beobachtungsobjekts (1) sowohl durch den Bereich der aktiven Linse mit Brechungsindexgradient (6) als auch durch den Bereich mit gleichmäßiger Brechungsindexverteilung der aktiven Platte mit Brechungsindexgradient (5) verlaufen, wodurch ein mehrebeniges Bild erzeugt wird, wobei die Laserlichtquelle ein Faserkollimator (17) ist, der an einen externen Laser angeschlossen ist, wobei der Faserkollimator (17) durch eine Klemme (19) in einer gleitbar verschiebbaren Fassung (18) befestigt ist, die sich in zwei Richtungen senkrecht zur Richtung des von der Laserlichtquelle (17) emittierten Laserstrahls (8) bewegt, mit einer auf dem Gehäuse (22) angeordneten, gleitbar verschiebbaren Fassung (18), wobei das optische Element (9) im Inneren des Gehäuses (22) so angeordnet ist, dass es den Bildlichtstrahl (7) durchlässt und den Laserstrahl (8) rechtwinklig entlang der optischen Achse (14) zur aktiven Platte mit Brechungsindexgradient (5) reflektiert, die hinter dem optischen Element (9) entlang des Bildlichtstrahls (7), der entlang der optischen Achse (14) des im Gehäuse (22) montierten optischen Systems verläuft, angeordnet ist, wobei der Laserstrahl (8) senkrecht auf die aktive Platte mit Brechungsindexgradient (5) fällt, wobei der den Laserstrahl nicht durchlassende Filter (12) hinter der aktiven Platte mit Brechungsindexgradient (5) so angeordnet ist, dass der den Laserstrahl nicht durchlassende Filter (12) axial im Inneren des Gehäuses (22) und parallel zur optischen Achse (14) angeordnet ist, um das Licht des Heizlaserstrahls (8) zu absorbieren, wobei an den Enden des Gehäuses (22) Anschlüsse (15, 16) angeordnet sind, um die Installation zusätzlicher klassischer optischer Systeme zu ermöglichen, ferner eine zusätzliche Laserlichtquelle (23"), die zur Emission eines zusätzlichen Heizlaserstrahls (8") konfiguriert ist, an einer zusätzlichen gleitbar verschiebbaren Fassung (18") mit einer zusätzlichen Klemme (19") montiert und in einem zusätzlichen Gehäuse mit Seitenwänden (22') und (22") montiert ist, wobei sich die zusätzliche Fassung (18") in zwei Richtungen senkrecht zur Richtung des zusätzlichen Heizlaserstrahls (8") bewegt, wobei das im Inneren des zusätzlichen Gehäuses mit Seitenwänden (22') und (22") montierte zusätzliche optische Element (24) den Heizlaserstrahl (8) von der Laserlichtquelle (23), die in dem zusätzlichen Gehäuse mit Seitenwänden (22') und (22") angeordnet ist, durchlässt und den zusätzlichen Heizlaserstrahl (8") von der zusätzlichen Laserlichtquelle (23") reflektiert, indem beide Strahlen parallel auf das optische Element (9), das in dem Gehäuse (22) angeordnet ist, gerichtet werden, das den Bildlichtstrahl (7) durchlässt und die beiden Heizlaserstrahlen (8) und (8") rechtwinklig entlang der optischen Achse (14) auf die aktive Platte mit Brechungsindexgradient (5) reflektiert, in der Heizlaserstrahl (8) eine aktive Linse mit Brechungsindexgradient (6') erzeugt und der zusätzliche Heizlaserstrahl (8") eine zusätzliche Linse mit Brechungsindexgradient (6") erzeugt, sodass ein Bereich der aktiven Platte mit Brechungsindexgradient (5) mit einheitlichem Brechungsindex verbleibt, wobei der Durchmesser der durch den Heizlaserstrahl (8) ausgebildeten aktiven Linse mit Brechungsindexgradient (6') kleiner als die Apertur des optischen Bildgebungssystems ist, sodass Lichtstrahlen von einem Teil des Beobachtungsobjekts (1) durch den Bereich der aktiven Linse mit Brechungsindexgradient (6') verlaufen, während Lichtstrahlen von dem anderen Teil des Objekts (1') durch den Bereich mit einheitlicher Brechungsindexverteilung in der aktiven Platte mit Brechungsindexgradient (5) verlaufen, und wobei der Durchmesser der durch den zusätzlichen Heizlaserstrahl (8") ausgebildeten zusätzlichen aktiven Linse mit Brechungsindexgradient (6") kleiner ist als die Apertur des optischen Bildgebungssystems, sodass die Lichtstrahlen von dem Teil des dritten Beobachtungsobjekts (1''') durch den Bereich der zusätzlichen aktiven Linse mit Brechungsindexgradient (6") verlaufen, wodurch ein mehrebeniges Bild erzeugt wird.

7. Vorrichtung nach Anspruch 6, **dadurch gekennzeichnet, dass** die Laserlichtquelle (23) in einem zusätzlichen Gehäuse mit Seitenwänden (22') und (22") angeordnet ist und die zusätzliche Laserlichtquelle (23") ein Diodenlaser ist.

8. Vorrichtung nach Anspruch 6, **dadurch gekennzeichnet, dass** das optische Element (9), das im Inneren des Gehäuses (22) ist, ein dichroitischer Spiegel ist.

9. Vorrichtung nach Anspruch 6, **dadurch gekennzeichnet, dass** das optische Element (9), das im Inneren des Gehäuses (22) ist, ein Polarisationswürfel ist.

10. Vorrichtung nach Anspruch 6, **dadurch gekennzeichnet, dass** das zusätzliche optische Element (24), das im Inneren des zusätzlichen Gehäuses mit Seitenwänden (22', 22) angeordnet ist, ein dichroitischer Spiegel ist.

11. Vorrichtung nach Anspruch 6, **dadurch gekennzeichnet, dass** das zusätzliche optische Element (24), das im Inneren des zusätzlichen Gehäuses mit Seitenwänden (22', 22) angeordnet ist, ein Polarisationswürfel ist.

## Revendications

1. Procédé de formation d'image utilisant une lentille varifocale multiplan, **caractérisé en ce que** le procédé est exécuté dans un dispositif comprenant un système d'imagerie optique (2, 3) et une plaque à indice de réfraction à gradient actif (5) faite d'un matériau thermo-optique avec distribution homogène de l'indice de réfraction, dans lequel un type divergent ou convergent de lentille thermique varifocale à indice de réfraction à gradient actif (6) est formé en dirigeant un faisceau laser chauffant (8), propagé dans une direction parallèle à l'axe optique du système optique sur la plaque à indice de réfraction à gradient actif (5), créant ainsi la lentille varifocale multiplan, dans laquelle la lentille à gradient actif d'indice de réfraction (6') a un diamètre inférieur au diamètre de l'ouverture du système optique d'imagerie afin de créer une image multiplanaire; la méthode consiste en outre à placer au moins une lentille convergente du système optique d'imagerie de manière à ce que les rayons lumineux provenant d'une partie d'un premier objet observé (1) traversent la zone de la lentille à gradient actif d'indice de réfraction (6') ainsi que la zone présentant une distribution homogène de l'indice de réfraction de la plaque à gradient actif d'indice de réfraction (5), dans lequel tous les rayons qui traversent la plaque à indice de réfraction à gradient actif (5) traversent également au moins une lentille convergente, et en conséquence les rayons du premier objet observé (1) qui traversent la lentille à gradient actif d'indice de réfraction (6') forment une image nette (4") de la partie du premier objet observé (1) à une distance d'imagerie mesurée à partir du second plan de la lentille principale à gradient actif d'indice de réfraction (6'), différente de celle des rayons du premier objet observé (1) qui traversent la partie de la plaque à gradient actif d'indice de réfraction (5) ayant une distribution homogène de l'indice de réfraction, la lentille à gradient actif d'indice de réfraction (6') formant une image nette (4) d'une partie du premier objet observé (1) à la même distance d'image mesurée à partir du second plan de la lentille principale à gradient actif d'indice de réfraction (6'), dans laquelle apparaît une image (4') d'un second objet observé (1'), et dans lequel le second objet observé (1') est situé dans un plan différent de celui du premier objet observé (1), dans lequel tous les rayons lumineux qui traversent le système optique utilisé pour l'imagerie passent par la lentille à gradient actif d'indice de réfraction (6') créant une image nette (4') du second objet observé (1') dans un plan d'image identique au plan dans lequel une image nette (4) de la partie du premier objet observé (1) a été créée, donnant ainsi une image nette uniforme, multiplan, de la partie du premier objet observé (1) et du second objet observé (1'), dans lequel, après la création d'une autre lentille à gradient actif d'indice de réfraction (6") dans la plaque à gradient actif d'indice de réfraction (5) avec un axe de symétrie parallèle ne chevauchant pas l'axe optique du système, tous les rayons lumineux passant par une partie d'un troisième objet observé (1‴) qui traversent le système optique d'imagerie et passent par la lentille à gradient actif d'indice de réfraction supplémentaire (6") forment une image nette (4‴) de la partie du troisième objet observé (1‴) dans le même plan que celui dans lequel les images (4) et (4') du premier (1) et du deuxième (1') objets observés ont été créées, donnant ainsi une image multiplan, uniforme et nette à partir de la combinaison de l'image (4) de la partie du premier objet observé (1), de l'image (4') du deuxième objet observé (1') et de l'image (4‴) de la partie du troisième objet observé (1 "), les trois objets observés se trouvant dans des plans différents.

2. Méthode selon la revendication 1, **caractérisée par le fait que** la lentille à gradient actif d'indice de réfraction (6') divergente est utilisée lorsque le deuxième objet observé (1') est situé à une plus grande distance, mesurée à partir du premier plan de la lentille principale à gradient actif d'indice de réfraction (6'), que le premier objet observé (1).

3. Méthode selon la revendication 1, **caractérisée par le fait que** la lentille convergente à gradient actif d'indice de réfraction (6') est utilisée lorsque le second objet observé (1') est situé à une distance inférieure, mesurée à partir du premier plan de la lentille principale à gradient actif d'indice de réfraction (6') que le premier objet observé (1).

4. Méthode selon la revendication 1, **caractérisée par le fait que** la lentille divergente d'indice de réfraction à gradient actif supplémentaire (6") est utilisée lorsque le troisième objet observé (1‴) est situé à une plus grande distance, mesurée à partir du premier plan de la lentille principale d'indice de réfraction à gradient actif supplémentaire (6"), que le premier objet observé (1).

5. Méthode selon la revendication 1, **caractérisée par le fait que** la lentille convergente d'indice de réfraction à gradient actif supplémentaire (6") est utilisée lorsque le troisième objet observé (1‴) est situé à une distance inférieure, mesurée à partir du premier plan de la lentille principale d'indice de réfraction à gradient actif supplémentaire (6"), à celle du premier objet observé (1).

6. Dispositif de création d'images multiplanaires avec une lentille varifocale multiplan, le dispositif comprenant un système optique d'imagerie (2, 3) et une lentille à gradient actif d'indice de réfraction (6'), dans lequel la lentille à gradient actif d'indice de réfraction est un sous-ensemble du système optique d'imagerie et agit en tant que lentille varifocale multiplan, la lentille à gradient actif d'indice de réfraction comprend au moins une source de lumière laser (17) configurée pour émettre un faisceau laser chauffant (8), un support (18) coulissant dans deux directions perpendiculaires, un élément optique (9) situé dans le boîtier (22) transmettant la lumière imagée (7) sur une large gamme spectrale et réfléchissant le faisceau laser chauffant (8), une plaque à gradient actif d'indice de réfraction (5) ayant un indice de réfraction homogène, un filtre imperméable au faisceau laser (12) et un boîtier (22) maintenant les composants à des distances mutuelles fixes, **caractérisé par le fait que** la lentille à gradient actif d'indice de réfraction (6') est formée dans la plaque à gradient actif d'indice de réfraction (5) par le faisceau laser chauffant (8) de sorte qu'une zone de la plaque à gradient actif d'indice de réfraction (5) conserve une distribution homogène de l'indice de réfraction, le diamètre de la lentille à gradient actif d'indice de réfraction (6') formée par le faisceau laser chauffant (8) étant inférieur à l'ouverture du système optique d'imagerie, de sorte que les rayons lumineux provenant d'une partie de l'objet observé (1) traversent la zone de la lentille à gradient actif d'indice de réfraction (6') ainsi que la zone présentant une distribution homogène de l'indice de réfraction de la plaque à gradient actif d'indice de réfraction (5), créant ainsi une image multiplanaire, dans lequel la source de lumière laser est un collimateur à fibre optique (17) connectable à un laser externe, le collimateur à fibre optique (17) étant monté par une pince (19) dans un support coulissant (18) fonctionnant dans deux directions perpendiculaires à la direction du faisceau laser (8) sortant de la source de lumière laser (17), le support coulissant (18) étant placé sur le boîtier (22), l'élément optique (9) étant situé dans le boîtier (22) de manière à transmettre le faisceau lumineux imagé (7) et à réfléchir le faisceau laser (8) à angle droit, le long de l'axe optique (14), vers la plaque active à gradient d'indice de réfraction (5), qui est placée derrière l'élément optique (9) le long du faisceau de lumière imagée (7) passant le long de l'axe optique (14) du système optique installé dans le boîtier (22), dans lequel le faisceau laser (8) tombe perpendiculairement sur la plaque à indice de réfraction à gradient actif (5), le filtre imperméable au faisceau laser (12) est situé derrière la plaque à indice de réfraction à gradient actif (5), de sorte que le filtre imperméable au faisceau laser (12) est situé axialement dans le boîtier (22) et perpendiculairement à l'axe optique (14), afin d'absorber la lumière du faisceau laser chauffant (8), les extrémités du boîtier (22) étant équipées de connecteurs (15, 16) qui permettent l'installation de systèmes optiques classiques supplémentaires, une autre source de lumière laser (23") configurée pour émettre un autre faisceau laser chauffant (8") est montée sur un autre support coulissant (18") à l'aide d'une autre pince (19") et installée dans l'autre boîtier avec les parois latérales (22') et (22"), où le support supplémentaire (18") fonctionne dans deux directions perpendiculaires à la direction d'émission du faisceau laser chauffant supplémentaire (8"), dans lequel un autre élément optique (24) est monté dans l'autre boîtier avec les parois latérales (22') et (22") transmet le faisceau laser chauffant (8) provenant de la source de lumière laser (23) située dans l'autre boîtier avec les parois latérales (22') et (22") et réfléchit l'autre faisceau laser chauffant (8") provenant de l'autre source de lumière laser (23"), en dirigeant les deux faisceaux en parallèle sur l'élément optique (9) situé dans le boîtier (22), qui transmet le faisceau de lumière imagée (7) et réfléchit les deux faisceaux laser chauffants (8) et (8") à angle droit le long de l'axe optique (14) vers la plaque à indice de réfraction à gradient actif (5), le faisceau laser chauffant (8) créant la lentille d'indice de réfraction à gradient actif (6') et le faisceau laser chauffant supplémentaire (8") créant une autre lentille d'indice de réfraction à gradient actif (6") de sorte qu'une zone de la plaque à indice de réfraction à gradient actif (5) reste dotée d'un indice de réfraction homogène, le diamètre de la lentille à gradient actif d'indice de réfraction (6') formée par le faisceau laser chauffant (8) est inférieur à l'ouverture du système optique d'imagerie, de sorte que les rayons lumineux provenant d'une partie de l'objet observé (1) traversent la zone de la lentille à gradient actif d'indice de réfraction (6'), tandis que les rayons lumineux provenant de la deuxième partie de l'objet (1') traversent la zone présentant une distribution homogène de l'indice de réfraction de la plaque à indice de réfraction à gradient actif (5), et dans laquelle le diamètre de la lentille d'indice de réfraction à gradient actif supplémentaire (6") formée par le faisceau laser chauffant supplémentaire (8") est inférieur à l'ouverture du système optique d'imagerie de sorte que les rayons lumineux provenant d'une partie du troisième objet observé (1‴) traversent la zone de la lentille d'indice de réfraction à gradient actif supplémentaire (6"), ce qui crée une image multiplanaire.

7. Dispositif selon la revendication 6, **caractérisé par le fait que** la source de lumière laser (23) est située dans le boîtier supplémentaire avec les parois latérales (22') et (22") et que la source de lumière laser supplémentaire (23") est un laser à diode.

8. Dispositif selon la revendication 6, **caractérisé par le fait que** l'élément optique (9) situé dans le boîtier (22) est un miroir dichroïque.

9. Dispositif, selon la revendication 6, **caractérisé en ce que** l'élément optique (9) situé dans le boîtier (22) est un cube polarisant.

10. Dispositif, selon la revendication 6, **caractérisé en ce que** l'autre élément optique (24) situé dans le boîtier supplémentaire avec les parois latérales (22', 22") est un miroir dichroïque.

11. Dispositif, selon la revendication 6, **caractérisé en ce que** l'élément optique supplémentaire (24) situé dans le boîtier supplémentaire avec les parois latérales (22', 22") est un cube polarisant.
